# EUROPÄISCHE PATENTSCHRIFT

(11) **EP 1 256 475 B1**
(45) Veröffentlichungstag und Bekanntmachung des Hinweises auf die Patenterteilung: **09.07.2003**
(21) Anmeldenummer: 02008556.9
(22) Anmeldetag: 16.04.2002
(51) Int. Cl.: B60J 7/185

(54) **Verriegelungseinrichtung für ein verstellbares Dachteil in einem Fahrzeugdach**
Locking device for an adjustable roof part in a vehicle roof
Système de verrou pour un élément réglable du toit d'un véhicule

(30) Priorität: 06.05.2001 DE 10121858
(43) Veröffentlichungstag der Anmeldung: 13.11.2002
(73) Patentinhaber: CTS Fahrzeug-Dachsysteme GmbH, 21079 Hamburg (DE)
(72) Erfinder: Hansen, Klaus Peter, 21339 Lüneburg (DE); Schumacher, Thorsten, 25495 Kummerfeld (DE)
(74) Vertreter: Müller, Gottfried

(56) Entgegenhaltungen:
- EP-A- 0 657 607
- DE-A- 19 801 852
- DE-U- 20 016 292

## Beschreibung

Die Erfindung bezieht sich auf eine Verriegelungseinrichtung für ein verstellbares Dachteil in einem Fahrzeugdach nach dem Oberbegriff des Anspruches 1.

Eine derartige Verriegelungseinrichtung ist in der Druckschrift DE 198 01 852 A1 beschrieben worden. Die Verriegelungseinrichtung ist zwischen einer Verriegelungsstellung, in der das Verdeck des Fahrzeugdaches an einem Windschutzscheibenrahmen festgelegt ist, und einer Entriegelungsstellung, in der das Verdeck in eine Offen- bzw. Ablagestellung zu überführen ist, zu verstellen. In Verriegelungsstellung greift ein Verschlusshaken der Verriegelungseinrichtung in eine zugeordnete Verschlussaufnahme ein und verrastet in dieser, um ein unbeabsichtigtes Lösen der Verriegelungseinrichtung insbesondere während der Fahrt zu verhindern.

Um den Verriegelungszustand des Verschlusshakens beim Schließen und Öffnen des Verdecks erfassen zu können, ist an der Verschlussaufnahme ein berührungslos arbeitender Reedsensor mit einem zugehörigen Magneten angeordnet, der beim Verriegelungsvorgang beim Einführen des Verschlusshakens in die Verschlussaufnahme ein Signal generiert. Das Signal kann zum Zuziehen des Verschlusshakens für die Erreichung der endgültigen Verriegelungsposition herangezogen werden.

Für ein selbsttätiges Öffnen und Schließen des Verdecks ist es von großer Bedeutung, die korrekte Funktion des Verschlusshakens und insbesondere auch die aktuelle Position des Verschlusshakens in der Verschlussaufnahme feststellen zu können. Man ist daher bestrebt, sensitive Sensoren zur Erfassung des Verriegelungszustandes einzusetzen.

Die Druckschrift DE 199 27 236 C1 offenbart ebenfalls eine Verriegelungseinrichtung für ein verstellbares Dachteil mit einem zwischen einer Verriegelungsstellung und einer Entriegelungsstellung zu verstellenden Verschlusshaken, der in Verriegelungsstellung in eine zugeordnete Verschlussaufnahme eingreift. Über einen an der Verriegelungseinrichtung angeordneten Mikroschalter, der die Funktion eines Sensors übernimmt, oder alternativ über einen induktiven Sensor kann das Einklinken des Verschlusshakens in die Verschlussaufnahme festgestellt werden, woraufhin eine elektronische Steuerung einen Elektromotor ansteuert, welcher die Zuziehbewegung des Verschlusshakens auslöst.

Desweiteren kann über eine Gegenlagererkennungseinrichtung die Arretierung des Verschlusshakens festgestellt werden. Damit können mit Hilfe von zwei Sensoren insgesamt zwei Verriegelungszustände der Verriegelungsbewegung festgestellt werden.

Die Druckschrift DE 199 44 615 A1 offenbart ein Schloss für ein verschwenkbares Kraftfahrzeugverdeck mit einem Verschlusshaken, welcher in Verriegelungsstellung in einen Bügel arretierend eingreift, wobei beim Schließen des Verdecks ein Sensor ein Signal abgibt, falls das Verdeck eine bestimmte Lage erreicht hat. Der Sensor dient somit zur Feststellung des Bewegungsablaufes des Verdeckes, nicht jedoch zur Feststellung des Verriegelungszustandes der Verriegelungseinrichtung. Es handelt sich bei der Verdeckbewegung und bei der Verriegelungsbewegung grundsätzlich um verschiedene, separat anzusteuernde Bewegungsvorgänge, so dass aus der Feststellung der aktuellen Verdeckposition nur der Zeitpunkt der Auslösung der Verriegelungsbewegung festgelegt werden kann, nicht jedoch auf den Verriegelungszustand der Verriegelungseinrichtung geschlossen werden kann.

Der Erfindung liegt das Problem zugrunde, eine Verriegelungseinrichtung mit zwei diametral gegenüberliegenden Verschlusshaken zu schaffen, bei der der aktuelle Verriegelungszustand mit geringem Aufwand bei zugleich hoher Präzision festgestellt und zweckmäßig auch Fehlfunktionen der Verriegelungseinrichtung detektiert werden können.

Diese Aufgabe wird durch die Merkmale des Anspruchs 1 gelöst Über die drei erfindungsgemäß eingesetzten Sensoren können verschiedene Verriegelungsstufen sensiert werden, wodurch ein ordnungsgemäßer Verriegelungsvorgang festgestellt bzw. Fehler beim Verriegeln entdeckt werden können.

Bei den drei Sensoren handelt es sich um einen ersten Sensor zur Detektierung einer Vorbereitungsstellung des Verschlusshakens zum Einklinken in die Verschlussaufnahme, um einen zweiten Sensor zur Detektierung des tatsächlichen Einklinkens in die Verschlussaufnahme und um einen dritten Sensor zur Detektierung der Verriegelung des Verschlusshakens nach dem Einklinken in die Verschlussaufnahme. Mit Hilfe des ersten Sensors kann festgestellt werden, ob der Verschlusshaken in eine Eingriffsposition verschwenkt werden kann, in der ein Eingreifen in die Verschlussaufnahme möglich ist. Mit Hilfe des zweiten Sensors wird festgestellt, ob der Verschlusshaken auch tatsächlich in die Verschlussaufnahme eingeführt worden ist und nicht versehentlich außerhalb der Verschlussaufnahme in seine Verriegelungsposition überführt wird. Mit Hilfe des dritten Sensors wird festgestellt, ob die gesamte Verschlusseinrichtung in der Verriegelungsstellung fixiert werden kann, um ein versehentliches Entriegeln insbesondere während der Fahrt zu verhindern. Die Sensoren sind bevorzugt als berührungslos detektierende Sensoren ausgebildet, insbesondere als Hallsensoren.

Ein Ausführungsbeispiel der Erfindung wird nachstehend an Hand der Zeichnungen beschrieben. Es zeigen:
- Fig. 1: ein bewegliches Dachteil in einem Fahrzeugdach mit zwei seitlich angeordneten Verschlusshaken einer Verriegelungseinrichtung, welche über einen zentralen Antriebslenker und einen Aktuator zwischen Entriegelungsposition und Verriegelungsposition zu verstellen sind,
- Fig. 2: die beiden Verschlusshaken einschließlich ihres Antriebes in einer perspektivischen Darstellung,
- Fig. 3: der Antrieb für die Verschlusshaken in einer vergrößerten, perspektivischen Darstellung,
- Fig. 4: eine Fig. 3 entsprechende Darstellung, jedoch aus einer anderen Perspektive,
- Fig. 5: der Antrieb für die Verschlusshaken in Draufsicht,
- Fig. 6a bis 6c: eine schematische Darstellung des Verschlusshakenantriebs in Entriegelungsstellung (Fig. 6a), in Totpunkt- bzw. Strecklage (Fig. 6b) und in Verriegelungsstellung (Fig. 6c),
- Fig. 7: eine perspektivische Darstellung einer Verschlussaufnahme, in die der Verschlusshaken in Verriegelungsposition eingreift,
- Fig. 8: die Verschlussaufnahme in einer Schnittdarstellung durch einen Hallsensor.

In den folgenden Figuren sind gleiche Bauteile mit gleichen Bezugszeichen versehen.

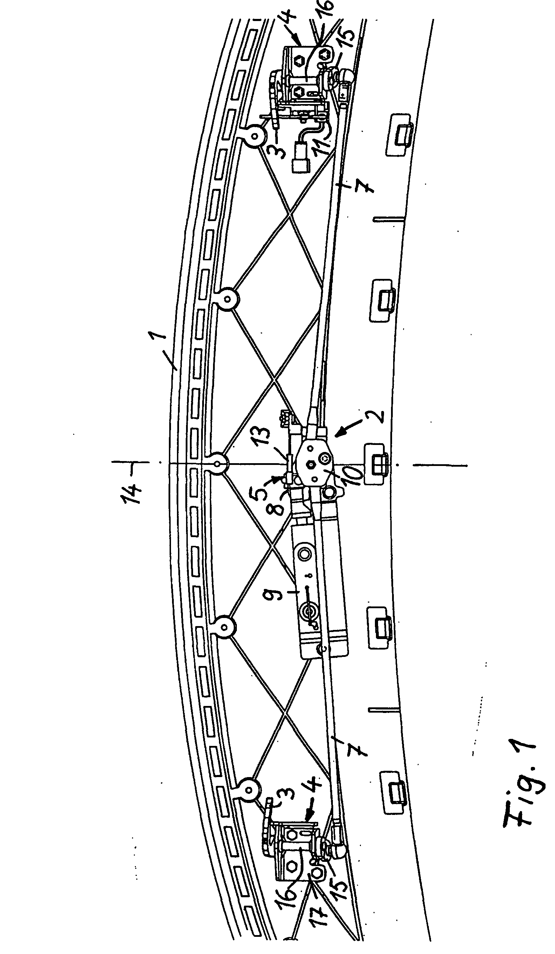

In Fig. 1 ist die Unterseite eines beweglichen Dachteiles eines Fahrzeugdaches dargestellt, das zwischen einer den Fahrzeuginnenraum überdeckenden Schließposition und einer den Fahrzeuginnenraum freigebenden Cabrioletposition zu verstellen ist. Bei dem Fahrzeugdach kann es sich um ein Softtop oder um ein Hardtop handeln. Um in Schließstellung das Fahrzeugdach fest mit dem Windschutzscheibenrahmen oder einem anderen karosseriefesten Dachteil zu verriegeln, befindet sich auf der unteren Seite des beweglichen Dachteiles 1 auf.der dem Windschutzscheibenrahmen zugewandten Vorderseite eine Verriegelungseinrichtung 2, welche zwischen einer Entriegelungsposition und einer Verriegelungsposition zu verstellen ist, wobei in Entriegelungsposition das Dachteil in seine Ablagestellung überführt werden kann und in Verriegelungsposition das Dachteil am Windschutzscheibenrahmen bzw. an einem karosseriefesten weiteren Dachteil zu fixieren ist.

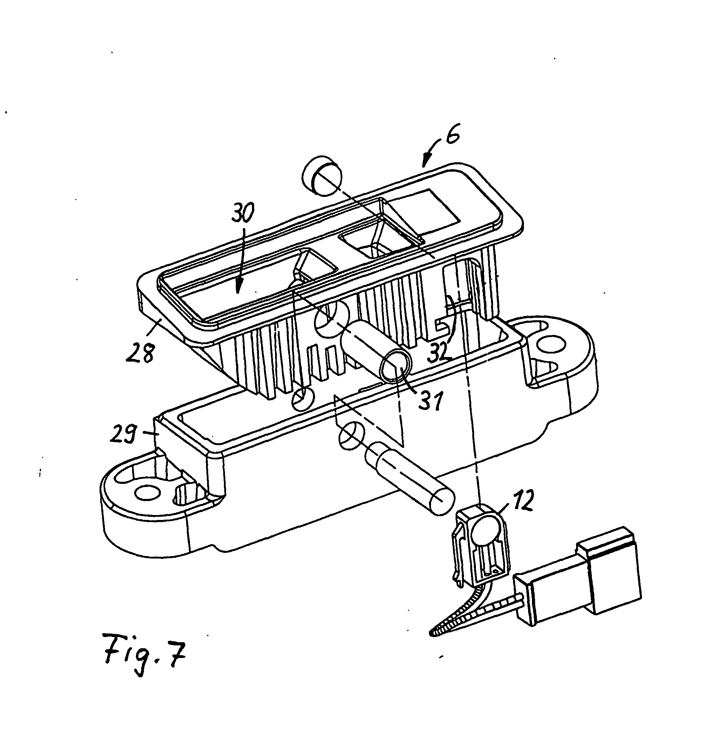

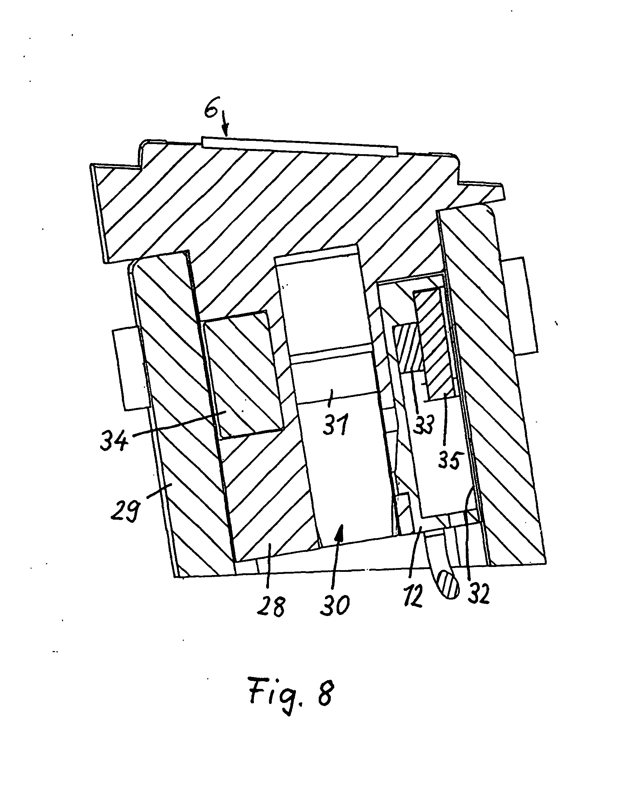

Die Verriegelungseinrichtung 2 auf der Unterseite des Dachteiles 1 umfasst zwei spiegelbildlich angeordnete, im jeweiligen Seitenbereich des Dachteiles 1 angeordnete Verschlusshaken 3, die über eine Hakenkinematik 4 schwenkbeweglich am Dachteil 1 gehalten sind und über eine Antriebseinrichtung 5 selbsttätig zwischen Entriegelungs- und Verriegelungsposition zu verstellen sind. In Verriegelungsposition ragen die Verschlusshaken 3 in eine in den Fig. 7 und 8 dargestellte Verschlussaufnahme 6 auf, welche ebenfalls Teil der Verriegelungseinrichtung ist.

Die Antriebseinrichtung 5 umfasst, wie Fig. 1 zu entnehmen, einen Antriebslenker 8, der schwenkbar am Dachteil 1 gelagert ist, wobei die Schwenkachse des Antriebslenkers 8 vertikal verläuft und senkrecht zur Längsachse 14 des Fahrzeugs steht. Die Antriebseinrichtung 5 umfasst weiterhin einen Aktuator 9, bei dem es sich insbesondere um ein hydraulisches, ansteuerbares Stellglied handelt, der am Antriebslenker 8 angreift und diesen um seine Schwenkachse verschwenkt. Darüber hinaus ist der Antriebseinrichtung 5 ein Antriebsgestänge zugeordnet, bestehend aus je einer Schubstange 7, die einenends gelenkig am Antriebslenker 8 angekoppelt und anderenends schwenkbar mit einem Hebel 15 verbunden ist, welcher an der Gelenkachse 16 des Verschlusshakens 3 angreift, so dass eine translatorische Verschiebebewegung der Schubstange 7 zu einer Schwenkbewegung des Verschlusshakens 3 führt. Die Gelenkachse 16 des Verschlusshakens 3 verläuft parallel zur Längsachse 14 des Fahrzeugs. Der Aktuator 9 liegt quer zur Längsachse 14 und erstreckt sich asymmetrisch im Bereich einer Dachteilhälfte des Dachteiles 1. In Fig. 1 sind die Verschlusshaken 3 in ihrer Verriegelungsposition dargestellt. In dieser Position liegen die Längsachsen der beiden Schubstangen 7 näherungsweise in einer gemeinsamen Linie und schneiden die Schwenkachse des Antriebslenkers 8.

Der Antriebseinrichtung 5 ist weiterhin ein Sensor 13 zugeordnet, über den insbesondere die Verriegelungsposition ("Lo-cked")der Verriegelungseinrichtung 2 detektiert werden kann. Ein weiterer Sensor 11 ist im Bereich der Hakenkinematik 4 des Verschlusshakens 3 angeordnet. Über den Sensor 11 kann festgestellt werden, ob der Verschlusshaken beim Überführen in Verriegelungsposition eine Vorbereitungsstellung ("Ready-to-Latch") einnimmt, in der der Verschlusshaken in die zugeordnete Verschlussaufnahme eingeführt werden kann. Der Sensor 11 ist dafür verantwortlich festzustellen, ob der Verschlusshaken in seiner bestimmungsgemäßen Weise verschwenkt werden kann.

Es kann ausreichen, nur auf einer Seite an einem der beiden Verschlusshaken einen Sensor 11 vorzusehen. Auf Grund der kinematischen Kopplung jedes Verschlusshakens über die Hakenkinematik und die jeweils zugeordnete Schubstange 7 mit dem Antriebslenker 8 reicht grundsätzlich ein einziger Sensor aus, um die Schwenkfähigkeit beider Verschlusshaken festzustellen.

Gemäß einer alternativen Ausführung kann es aber zweckmäßig sein, jedem Verschlusshaken einen Sensor zuzuordnen, um die Schwenkfähigkeit jedes Verschlusshakens unabhängig vom gegenüberliegenden Verschlusshaken detektieren zu können.

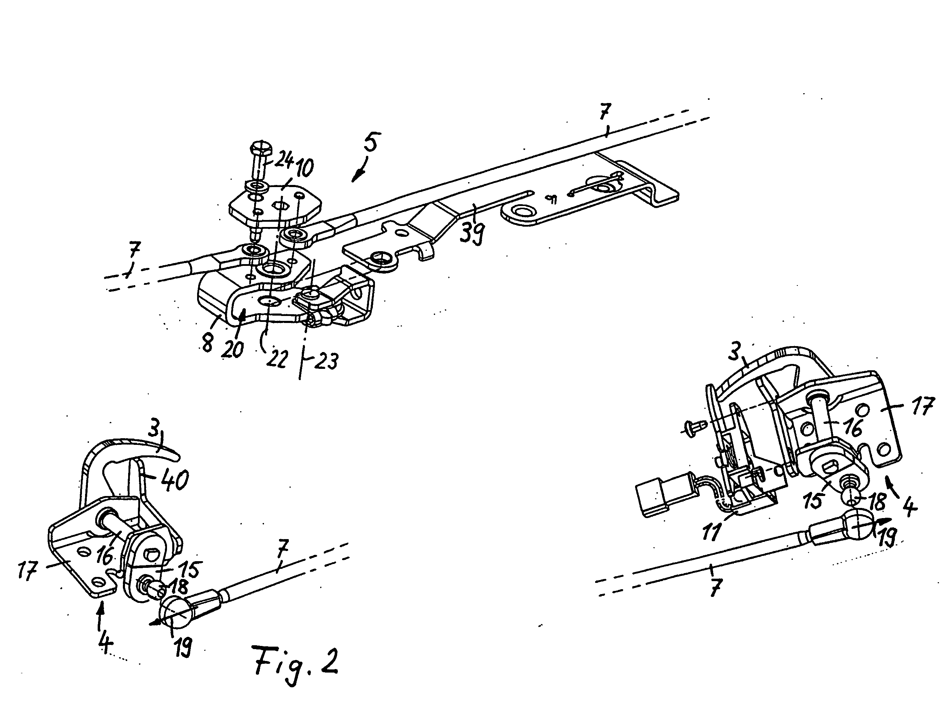

Wie Fig. 1 in Verbindung mit der vergrößerten Darstellung nach Fig. 2 zu entnehmen, umfasst die Hakenkinematik 4 ein Hakenlager 17, über das die Hakenkinematik am beweglichen Dachteil 1 angeschraubt ist und das Träger der Gelenkachse 16 des Verschlusshakens 3 ist. Fig. 2 ist außerdem zu entnehmen, dass der mit der Gelenkachse 16 verbundene Hebel 15 über ein Kugelgelenk 18 mit der Schubstange 7 verbunden ist, wobei das Kugelgelenk in Bezug auf die Gelenkachse 16 auf der dem Verschlusshaken 3 radial gegenüberliegenden Seite am Hebel 15 angeordnet ist, so dass eine translatorische Stellbewegung der Schubstange 7 in Schubrichtung 19 zu einer rotatorischen Schwenkbewegung des Verschlusshakens 3 in Richtung seiner Verriegelungsposition führt. Entsprechend wird der Verschlusshaken 3 aus seiner Verriegelungs- in seine Entriegelungsposition überführt, wenn die Schubstange 7 entgegengesetzt zur Schubrichtung 19 gezogen wird. Außerdem ist in Fig. 2 ein dem Verschlusshaken 3 zugeordneter Crashpin 40 dargestellt, der die Schwenkbewegung des Verschlusshakens 3 insbesondere im Falle eines Crashs begrenzt.

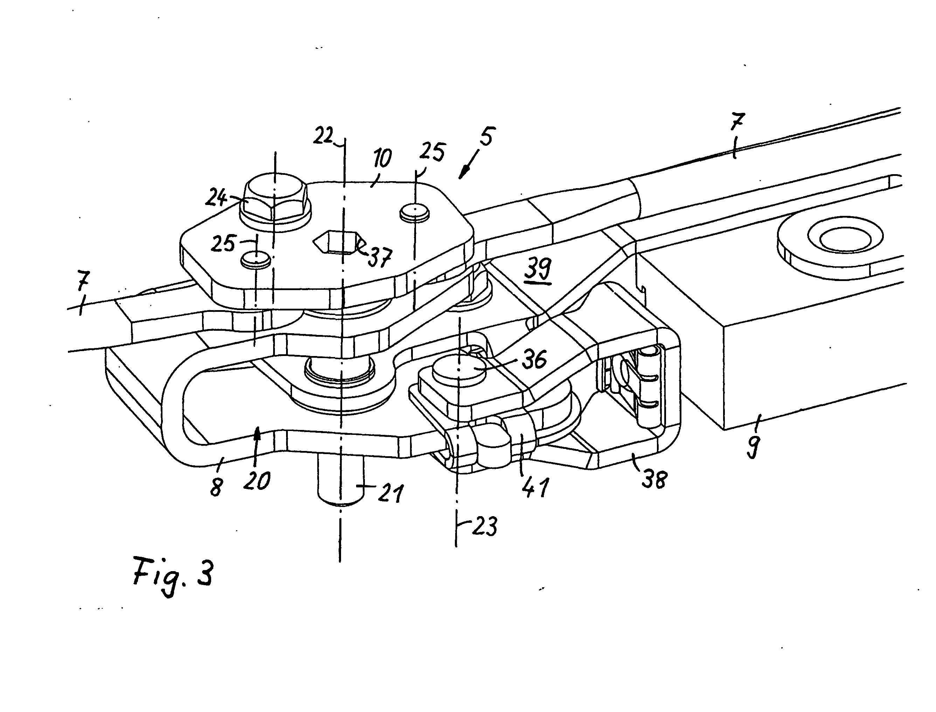

Die freie Stirnseite der beiden Verschlusshaken 3 ist dem mittig angeordneten Antriebslenker 8 zugewandt. Fig. 2 und die vergrößerten Darstellung nach Fig. 3 zeigen die Verriegelungseinrichtung in einer Totpunkt- bzw. Strecklage zwischen Entriegelungs- und Verriegelungsstellung, wobei in Totpunktlage beide Schubstangen 7 etwa in einer Linie liegen. Der Antriebslenker 8 ist U-förmig ausgebildet und über einen Gelenkbolzen 36 mit einer Drehachse 23 schwenkbar mit einem U-förmigen Gabelkopfflansch 38 verbunden, der von dem Aktuator 9 beaufschlagt wird. In den Aufnahmeraum 20 zwischen den beiden Schenkeln des Antriebslenkers 8 ragt ein Befestigungsblech 39 ein, welches fest mit dem Dachteil verbunden ist und über einen Gelenkbolzen 21 gelenkig mit dem Antriebslenker 8 gekoppelt ist. Der Gelenkbolzen 21 ist in Bohrungen in den Schenkeln des Antriebslenkers 8 aufgenommen und definiert eine Schwenkachse 22, die mit Abstand zur Drehachse 23 des Angriffspunktes des Aktuators 9 am Antriebslenker 8 liegt.

An dem Antriebslenker 8 ist über eine Befestigungsschraube 24 eine Deckplatte 10 fixiert, wobei zwischen Deckplatte 10 und Antriebslenker 8 die beiden Schubstangen 7 aufgenommen sind. Die beiden Schubstangen 7 sind ebenfalls gelenkig mit dem Antriebslenker 8 bzw. der Deckplatte 10 verbunden, wobei die jeweiligen Gelenkachsen 25 der beiden Schubstangen 7 sowohl mit Abstand zur Schwenkachse 22 des Antriebslenkers am Dachteil als auch mit Abstand zur Gelenkachse 23 des Aktuators 9 am Antriebslenker 8 liegen.

In die Deckplatte 10 ist eine Mehrkant-Ausnehmung 37 eingebracht, die in der Schwenkachse 22 liegt und in die ein komplementär geformtes Werkzeug zur manuellen Betätigung der Verriegelungseinrichtung einsetzbar ist.

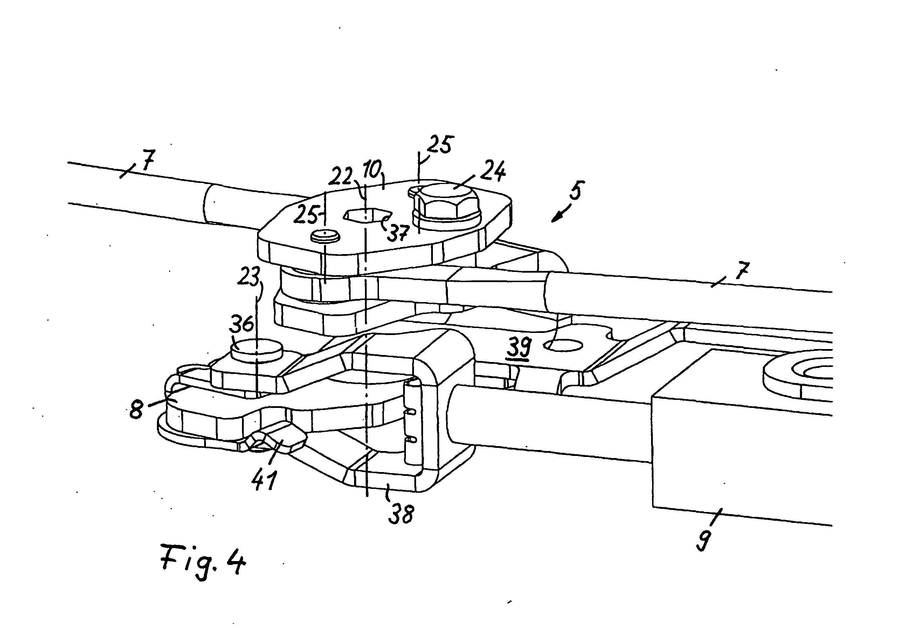

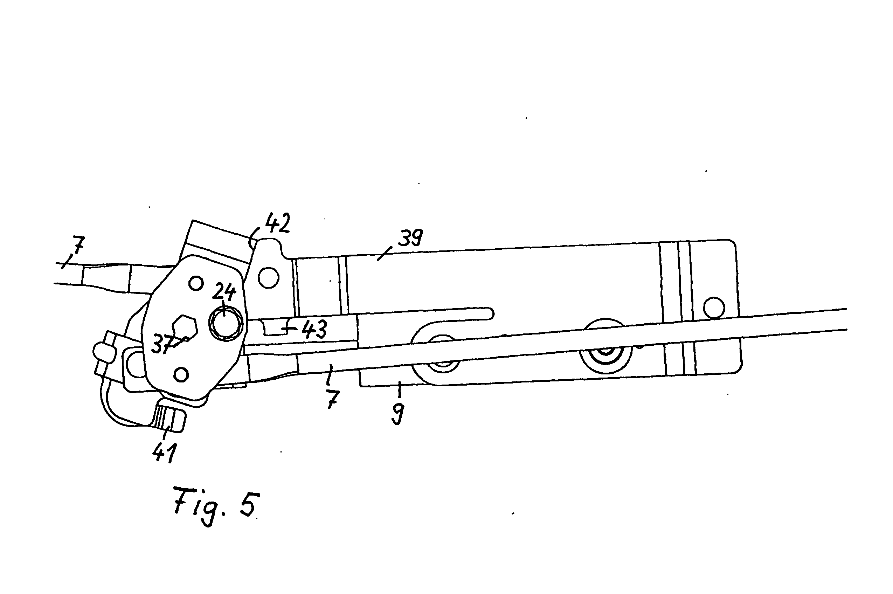

Die Fig. 4 und 5 zeigen zwei Darstellungen der Verriegelungseinrichtung in Entriegelungsstellung, in der das Fahrzeugverdeck geöffnet werden kann. Zur Sicherung der Verriegelungseinrichtung in Verriegelungsstellung ist eine Sekundärverriegelung vorgesehen, welche ein unbeabsichtigtes Lösen der Dachverriegelung während des regulären Fahrbetriebs mit den hierbei auftretenden stoßartigen Kräften, die über die Fahrbahn auf das Fahrzeug übertragen werden, sowie im Falle eines Crashs verhindern soll. Die Sekundärverriegelung ist im Ausführungsbeispiel von einer Federklammer 41 gebildet, welche ein mit dem Verschlusshaken 3 kinematisch gekoppeltes Bauteil, insbesondere den Antriebslenker 8, in Verriegelungsstellung mit einer Klemmkraft beaufschlagt. Die Federklammer 41 ist von dem Gabelkopfflansch 38 am Antriebslenker 8 gehalten.

In Fig. 5 sind außerdem zwei Endanschläge 42 und 43 dargestellt, die am Befestigungsteil 39 ausgebildet sind und die die Entriegelungsstellung (Endanschlag 42) und die Verriegelungsstellung (Endanschlag 43) begrenzen. An die Endanschläge 42 und 43 grenzt in den Endstellungen ein verschwenkbares Bauteil der Verriegelungseinrichtung an, insbesondere der Antriebslenker 8 bzw. ein damit fest verbundenes Bauteil.

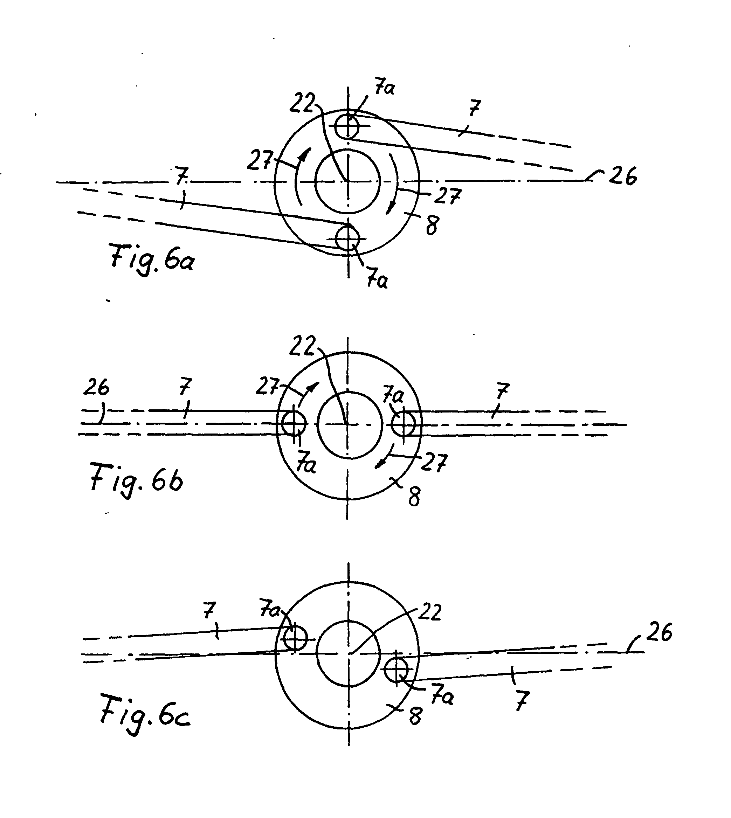

Die Fig. 6a bis 6c zeigen in schematischer Darstellung die auf die Schubstangen 7 übertragene Verriegelungsbewegung des Antriebslenkers 8. In Fig. 6a sind Antriebslenker 8 und Schubstangen 7 in Entriegelungsposition dargestellt. In dieser Position liegen die Verbindungspunkte 7a der Schubstangen 7 am Antriebslenker 8 mit maximalem radialem Abstand zu einer Verbindungslinie 26 zwischen der Schwenkachse 22 des Antriebslenkers 8 und dem Verbindungspunkt jeder Schubstange auf der gegenüberliegenden Seite zum Hebel 15 des Verschlusshakens 3 (siehe Fig. 2). Bei der Überführung des Antriebslenkers 8 aus der in Fig. 6a gezeigten Entriegelungsposition in Schwenkrichtung 27 zur Erreichung der Verriegelungsposition werden die Verbindungspunkte 7a der Schubstangen 7 um etwa 90° in Richtung der jeweils zugeordneten Verschlusshaken verschwenkt, bis die in Fig. 6b gezeigte Totpunktlage erreicht ist, in der die Verbindungspunkte 7a und die Längsachsen der Schubstangen 7 sich mit der Verbindungslinie 26 zwischen Schwenkachse 22 und Verbindungspunkte der Schubstangen am Hebel der Verschlusshaken überdecken. Bei einer weiteren Verdrehung um einen kleinen Winkelbetrag in Schwenkrichtung 27 über die Totpunktlage gemäß Fig. 6b hinaus wird die in Fig. 6c dargestellte Übertotpunktlage erreicht, die zugleich die Verriegelungsposition des Verschlusshakens 3 markiert.

Fig. 7 zeigt die Verschlussaufnahme 6, in die der Verschlusshaken in Verriegelungsposition verriegelnd eingreift. Die Verschlussaufnahme 6 befindet sich auf dem dem Verschlusshaken gegenüberliegenden Bauteil. Für den Fall, dass der Verschlusshaken am beweglichen Dachteil angeordnet ist, befindet sich die Verschlussaufnahme 6 im Bereich eines karosseriefesten Fahrzeugbauteils, insbesondere im oberen Bereich des Windschutzscheibenrahmens oder eines karosseriefesten, quer verlaufenden Dachteiles. Dementsprechend sind die Verhältnisse umgekehrt, falls der Verschlusshaken an einem karosseriefesten Dachteil bzw. am Windschutzscheibenrahmen angeordnet ist.

Die Verschlussaufnahme 6 umfasst einen in ein Gehäuse 29 einzusetzenden Einsatz 28, welcher eine Ausnehmung 30 aufweist, die über eine quer verlaufende Rolle 31 in zwei Abschnitte unterteilt ist. In Verriegelungsposition greift der Verschlusshaken 3 in die Ausnehmung 30 ein und untergreift die Rolle 31, wodurch der Verschlusshaken formschlüssig in der Verschlussaufnahme gehalten ist. Die Ausrichtung des Verdecks erfolgt beim Schließvorgang über die Außenkontur des Hakens.

An der Verschlussaufnahme 6 ist ein weiterer Sensor 12 angeordnet, über den das Einklinken ("Latched") des Verschlusshakens in die Verschlussaufnahme detektiert werden kann. Der Sensor 12 kann in eine Ausnehmung 32 im Einsatz 28 eingeschoben und in dieser verrastet werden.

Der der Verschlussaufnahme 6 zugeordnete Sensor 12 kann als Hallsensor ausgeführt sein, ebenso wie auch die beiden weiteren Sensoren 11 und 13 (siehe Fig. 1), die zur Detektierung der Vorbereitungsstellung des Verschlusshakens und zur Detektierung der Verriegelung des Verschlusshakens in der Verschlussaufnahme vorgesehen sind. Die Verwendung von Hallsensoren bietet den Vorteil, dass der jeweilige zu erkennende Zustand berührungslos erfasst werden kann.

Gemäß Fig. 8 umfasst der in die Ausnehmung 32 in der Verschlussaufnahme 6 eingesetzte Sensor 12 ein als Hallsensor ausgebildetes Sensorelement 33, welches sich in unmittelbarer Nähe zur Ausnehmung 30 befindet, in die der Verschlusshaken in Verriegelungsstellung eingreift, und von der Ausnehmung 30 nur durch eine dünne Gehäusewandung getrennt ist. Auf der diametral gegenüberliegenden Seite der Ausnehmung 30 ist ein Permanentmagnet 34 angeordnet, welcher ebenso wie das Sensorelement 33 durch eine lediglich dünn ausgebildete Wandung, welche durchlässig für Magnetlinien ist, von der den Verschlusshaken aufnehmenden Ausnehmung 30 getrennt ist.

Wird der Verschlusshaken zum Verriegeln in die Ausnehmung 30 eingeführt und durch das von dem Permanentmagneten 34 erzeugte Magnetfeld bewegt, entsteht im Sensorelement 32 eine Hallspannung, die als Sensorsignal - ebenso wie die Signale der weiteren Sensoren - einer Regel- und Steuerungseinheit zur weiteren Auswertung zugeführt werden kann. Bei ordnungsgemäßem Funktionieren der Sensoren wird unter Auswertung der Sensorsignale ein Stellsignal erzeugt, über das der Aktuator zur Verriegelung und Entriegelung des Verschlusshakens angesteuert wird. Im Fehlerfall kann ein Alarmsignal generiert werden.

In vorteilhafter Ausführung ist auf der dem Permanentmagneten 34 abgewandten Rückseite des Sensorelementes 33 innerhalb des Sensors 12 eine ferromagnetische Platte 35 angeordnet, die die Funktion hat, den sensitiv wirksamen Bereich des Hallsensors zu verbreitern, indem Magnetfeldlinien des Permanentmagneten 34 gebündelt und etwa konzentrisch zwischen dem Permanentmagneten 34 und der ferromagnetischen Platte 35 ausgerichtet werden. Zweckmäßig weist für eine optimale Ausrichtung der Magnetfeldlinien die ferromagnetische Platte 35 etwa die gleiche Stirnfläche auf wie der Permanentmagnet 34 und ist auf gleicher Höhe und parallel zum Magneten ausgerichtet.

Vorteilhaft bildet die ferromagnetische Platte 35 einen Bestandteil des Sensors 12 und ist gemeinsam mit dem Sensorelement in das Sensorgehäuse integriert. Auch die übrigen Sensoren können in gleicher Weise mit einer zusätzlichen, hinter dem Sensorelement angeordneten ferromagnetischen Platte ausgestattet sein.

## Patentansprüche

1. Verriegelungseinrichtung für ein zwischen einer Schließstellung und einer Offenstellung verstellbares Dachteil in einem Fahrzeugdach, mit zwei diametral gegenüberliegenden, zwischen einer Verriegelungsstellung und einer Entriegelungsstellung verstellbaren Verschlusshaken (3) am Dachteil, die in Verriegelungsstellung in jeweils eine zugeordnete Verschlussaufnahme (6) eingreifen, wobei zumindest ein Sensor (11, 12, 13) zur Detektierung der Verriegelungsstellung vorgesehen ist,
**dadurch gekennzeichnet,**
**dass** insgesamt drei Sensoren (11, 12, 13) vorgesehen sind, von denen ein erster Sensor (11) zur Detektierung einer Vorbereitungsstellung des Verschlusshakens (3) zum Einklinken in die Verschlussaufnahme (6), ein zweiter Sensor (12) zur Detektierung des Einklinkens des Verschlusshakens (3) in die Verschlussaufnahme (6) und ein dritter Sensor (13) zur Detektierung der Verriegelung des Verschlusshakens (3) in der Verschlussaufnahme (6) dient, und dass der zweite Sensor (12) zur Detektierung des Einklinkens des Verschlusshakens (3) und der dritte Sensor (13) zur Detektierung der Verriegelung des Verschlusshakens (3) an gegenüberliegenden Verschlusshaken (3) bzw. der jeweils zugeordneten Verschlussaufnahme (6) angeordnet sind.

2. Verriegelungseinrichtung nach Anspruch 1,
**dadurch gekennzeichnet,**
**dass** der erste Sensor (11) zur Detektierung der Vorbereitungsstellung des Verschlusshakens (3) zum Einklinken in die Verschlussaufnahme (6) an einer dem Verschlusshaken (3) zugeordneten Hakenkinematik (4) angeordnet ist.

3. Verriegelungseinrichtung nach Anspruch 1 oder 2,
**dadurch gekennzeichnet,**
**dass** der zweite Sensor (12) an der Verschlussaufnahme (6) zur Detektierung des Einklinkens des Verschlusshakens (3) angeordnet ist.

4. Verriegelungseinrichtung nach einem der Ansprüche 1 bis 3,
**dadurch gekennzeichnet,**
**dass** zumindest ein Sensor (11, 12, 13) als Hallsensor ausgebildet ist.

5. Verriegelungseinrichtung, insbesondere nach Anspruch 4,
**dadurch gekennzeichnet,**
**dass** auf der einem Magneten (34), der mit dem Hallsensor (12) zusammenwirkt, abgewandten Rückseite des Hallsensors (12) eine ferromagnetische Platte (35) angeordnet ist.

6. Verriegelungseinrichtung nach Anspruch 5,
**dadurch gekennzeichnet,**
**dass** alle Sensoren als Hallsensoren ausgebildet sind und auf der dem zugeordneten Magneten abgewandten Rückseite eine ferromagnetische Platte (35) aufweisen.

7. Verriegelungseinrichtung nach Anspruch 5 oder 6,
**dadurch gekennzeichnet,**
**dass** die ferromagnetische Platte (35) näherungsweise die gleiche Fläche aufweist wie der mit dem Hallsensor zusammenwirkende Magnet (34).

## Claims

1. Locking device for a roof part, which can be adjusted between a closed position and an open position, in a vehicle roof, having two diametrically opposite fastening hooks (3) on the roof part, which hooks can be adjusted between a locking position and an unlocking position and, in the locking position, engage in a respectively assigned fastening socket (6), with at least one sensor (11, 12, 13) for detecting the locking position being provided, **characterized in that** a total of three sensors (11, 12, 13) are provided, with a first sensor (11) being used to detect a ready-to-latch position of the fastening hook (3) for latching it into the fastening socket (6), a second sensor (12) being used to detect the latching of the fastening hook (3) into the fastening socket (6), and a third sensor (13) being used for detecting the locking of the fastening hook (3) in the fastening socket (6), and **in that** the second sensor (12) for detecting the latching of the fastening hook (3) and the third sensor (13) for detecting the locking of the fastening hook (3) are arranged on opposite fastening hooks (3) or on the respectively assigned fastening socket (6).

2. Locking device according to Claim 1, **characterized in that** the first sensor (11) for detecting the ready-to-latch position of the fastening hook (3) for latching it into the fastening socket (6) is arranged on hook kinematics (4) assigned to the fastening hook (3).

3. Locking device according to Claim 1 or 2,
**characterized in that** the second sensor (12) for detecting the latching of the fastening hook (3) is arranged on the fastening socket (6).

4. Locking device according to one of Claims 1 to 3, **characterized in that** at least one sensor (11, 12, 13) is designed as a Hall sensor.

5. Locking device, in particular according to Claim 4, **characterized in that** a ferromagnetic plate (35) is arranged on the rear side of the Hall sensor (12), which side faces away from a magnet (34) which interacts with the Hall sensor (12).

6. Locking device according to Claim 5, **characterized in that** all of the sensors are designed as Hall sensors and have a ferromagnetic plate (35) on the rear side facing away from the associated magnet.

7. Locking device according to Claim 5 or 6,
**characterized in that** the ferromagnetic plate (35) has a surface which is virtually the same size as the magnet (34) which interacts with the Hall sensor.

## Revendications

1. Système de verrouillage pour une partie de toit réglable entre une position fermée et une position ouverte dans un toit de véhicule, avec deux crochets de fermeture (3) diamétralement opposés et déplaçables entre une position de verrouillage et une position de déverrouillage sur la partie de toit, qui s'engagent en position de verrouillage dans respectivement un logement de fermeture (6) attribué, moyennant quoi il est prévu au moins un capteur (11, 12, 13) pour la détection de la position de verrouillage,
**caractérisé en ce que**
au total trois capteurs (11, 12, 13) sont prévus, dont un premier capteur (11) sert à la détection d'une position de préparation du crochet de fermeture (3) pour l'enclenchement dans le logement de fermeture (6), un deuxième capteur (12) à la détection de l'enclenchement du crochet de fermeture (3) dans le logement de fermeture (6) et un troisième capteur (13) à la détection du verrouillage du crochet de fermeture (3) dans le logement de fermeture (6), et **en ce que** le deuxième capteur (12) pour la détection de l'enclenchement du crochet de fermeture (3) et le troisième capteur (13) pour la détection du verrouillage du crochet de fermeture (3) sont disposés sur des crochets de fermeture (3) opposés ou le logement de fermeture (6) respectivement attribué.

2. Système de verrouillage selon la revendication 1,
**caractérisé en ce que**
le premier capteur (11) pour la détection de la position de préparation du crochet de fermeture (3) pour l'enclenchement dans le logement de fermeture (6) est disposé sur une cinématique de crochet (4) attribuée au crochet de fermeture (3).

3. Système de verrouillage selon la revendication 1 ou 2,
**caractérisé en ce que**
le deuxième capteur (12) est disposé sur le logement de fermeture (6) pour la détection de l'enclenchement du crochet de fermeture (3).

4. Système de verrouillage selon l'une quelconque des revendications 1 à 3,
**caractérisé en ce que**
au moins un capteur (11, 12, 13) est conçu comme un capteur de Hall.

5. Système de verrouillage, en particulier selon la revendication 4,
**caractérisé en ce que**
une plaque (35) ferromagnétique est disposée sur le côté arrière du capteur de Hall (12) opposé à un aimant (34) qui agit conjointement avec le capteur de Hall (12).

6. Système de verrouillage selon la revendication 5,
**caractérisé en ce que**
tous les capteurs sont conçus comme des capteurs de Hall et présentent une plaque (35) ferromagnétique sur le côté arrière opposé à l'aimant attribué.

7. Système de verrouillage selon la revendication 5 ou 6,
**caractérisé en ce que**
la plaque (35) ferromagnétique présente approximativement la même surface que l'aimant (34) agissant conjointement avec le capteur de Hall.
